# EUROPEAN PATENT APPLICATION

(11) **EP 3 009 343 A1**
(43) Date of publication of application: **20.04.2016**
(21) Application number: 15382466.9
(22) Date of filing: 28.09.2015
(51) Int. Cl.: B63H 20/08, F16J 15/00

(54) **PROTECTOR FOR POWER TRIM UNIT**

(30) Priority: 29.09.2014 ES 201431432
(71) Applicant: Valero Rovira, Antonio, 08022 Barcelona (ES)
(72) Inventor: VALERO ROVIRA, Antonio, E-08022 Barcelona (ES); ROVIROSA BOSCH, Pere, E-43700 El Vendrell-Tarragona (ES)
(74) Representative: ABG Patentes, S.L.

(57) **Abstract**

The invention refers to a «power trim» motor shaft protector (1) including a shaft (21, 22, 23) and a cover (24, 25, 26). The protector includes a coupling set and bellows. The coupling set submits a main through hole for the passage of a part of the shaft (21, 22, 23) through that main hole, also including a contact zone at the coupling set, assigned to be united at a cover, and a coupling area. The contact zone is made of electrically isolated material. The bellows (4) contain one end adequate to be joined tightly to the coupling zone of the coupling set, and another end adequate to be in contact with the extreme end of the shaft, in such way the interior of the bellows (4) is protected from water.

## Description

### PURPOSE OF THE INVENTION

The following invention refers to an element to protect an engine shaft.

### BACKGROUND OF THE INVENTION

«Power Trim» is an electro hydraulic elevation system which enables engines, generally of boats, to be elevated by one upper and two lower piston pumps without effort. Each piston goes through a cylinder and is attached to a covered shaft, visible from the outside. The cover protects the external piston. The system further comprise seals, which endeavours the water tightness of the defined area by the piston and the cylinder.

When these types of systems are installed on a boat they usually stay below the waterline, although still visible from outside but the shafts, visible from the exterior, get soiled with algae and snails. Not surprisingly they also suffer corrosion from nitre, lime, galvanic current and other components. Due to its movement up and down severally with the piston, the accumulations of dirt damage all the seals of the cylinder since the motor shafts move out. On their turn the damaged seals are the reason why water gets into the cylinder and oil gets lost polluting the environment. Over time the electro hydraulic system will fail to perform which imposes an extra cost on the maintenance of the engine and a massive ecological damage because more often spare parts need to be replaced.

### DESCRIPTION OF THE INVENTION

The present invention comes up with a solution for the prior issues through a protector for the motor shaft according to claim 1 and a system according to claim 10. The dependent claims define the preferred embodiments of the invention.

In a first inventive aspect, the invention provides a motor shaft protector, intended to be installed in a «power trim» engine shaft comprising a shaft with a visible end and a cover pierced by the shaft, the protector being characterized in that it comprises:
- a coupling set with a main through hole for the passage of a portion of the shaft through said main through hole, the coupling set further comprising a contact zone, intended to be put upon the cover and attached to it, and a coupling area, wherein the contact zone is manufactured of electrically isolated material, and
bellows, comprising a first end suitable for being tightly attached to the coupling zone of the coupling set, and a second end, suitable for being in contact with part of the visible end of the motor shaft, in such a way that the interior of the bellows stays watertight while in normal use.

Advantageously, this motor shaft protector can be placed on the shaft of a "power trim" engine without ever obstruct the normal activity of the engine, and encouraging that such motor shaft remains clean and free from little crustaceans deposits, due to the water tightness obtained in the bellows' interior.

In a particular embodiment, the coupling area comprises a rake for housing the first end of the bellows, in such way that the first end of the bellows is attached to the rake.

In a particular embodiment, the coupling set comprises threaded secondary through holes, each one of them intended to house a screw for the attachment between the coupling set and the cover.

In a particular embodiment, the coupling set is single-piece designed.

In a particular embodiment, is divided in two coupling pieces, a first coupling piece intended to be in contact with the cover and a second coupling piece, arranged in contact with the first coupling piece.

In a particular embodiment, the first coupling piece is made of electrically isolated material. Advantageously, using this material avoids galvanic corrosion of the engine parts and the parts of the motor shaft protector.

In a particular embodiment, wherein the bellows comprises a top cover located at its second end, suitable for housing the visible end of the shaft. More particularly, the top cover comprises a substantially doomed shaped housing suitable for housing the visible end of the shaft.

In a particular embodiment, the second end of the bellows is housed in a notch of the top cover and attached to it.

In a particular embodiment, the second end of the bellows comprises a through hole intended to be attached to the shaft.

In a second inventive aspect, the invention provides a system that comprises a shaft and a motor shaft protector according to any of the previous claims, where the shaft is arranged crossing the main through hole of the coupling set.

Advantageously, the diameter of the shaft and the through hole allows a simple installation on any piston cover of a "power trim" motor.

All of the described features in this specification (including the description and the figures) may be combined all ways, except mutually exclusive combinations.

### DESCRIPTION OF THE DRAWNINGS

These and other features and benefits of the invention, will be revealed as of the detailed best-practice description, only provided for the purpose, but not limited to, the illustration, with reference to the accompanying figures
Figure 1, this figure shows a perspective view of a known «power trim» engine.
Figure 2, this figure shows a cross section of a first embodiment of a motor shaft protector according to invention.
Figure 3, this figure shows a cross section of a second embodiment of a motor shaft protector according to invention.
Figure 4, this figure shows a cross section of a motor shaft comprising a particular embodiment of a shaft protector according to invention.
Figure 5, this figure shows a cross section of a motor shaft comprising another particular embodiment of a motor shaft protector according to invention.

### DETAILED EXPLANATION OF THE INVENTION

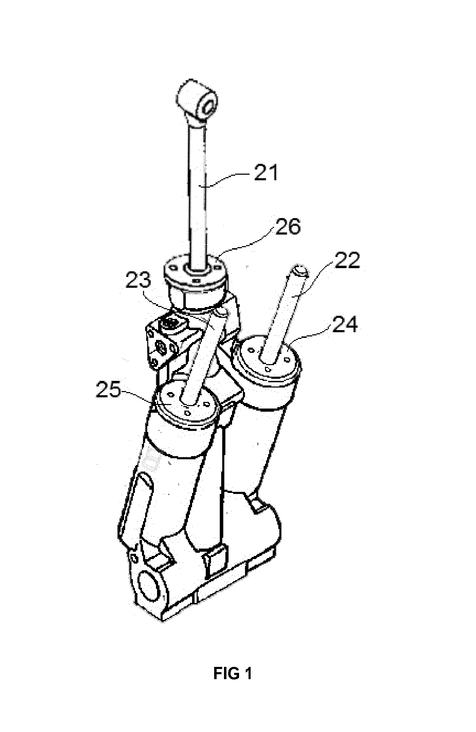

Figure 1 shows a known «power trim» engine comprising a main shaft (21) and two secondary shafts (22, 23). Each secondary shaft (22, 23) crosses a secondary cover (24, 25), in such a way that one end of the secondary shaft remains visible, and the other end, attached to a piston, remains hidden inside a cylinder. The main shaft (21) crosses a main cover (26), in such a way that one end of the main shaft (21) remains visible, and the other end, attached to a piston, remains hidden inside a cylinder.

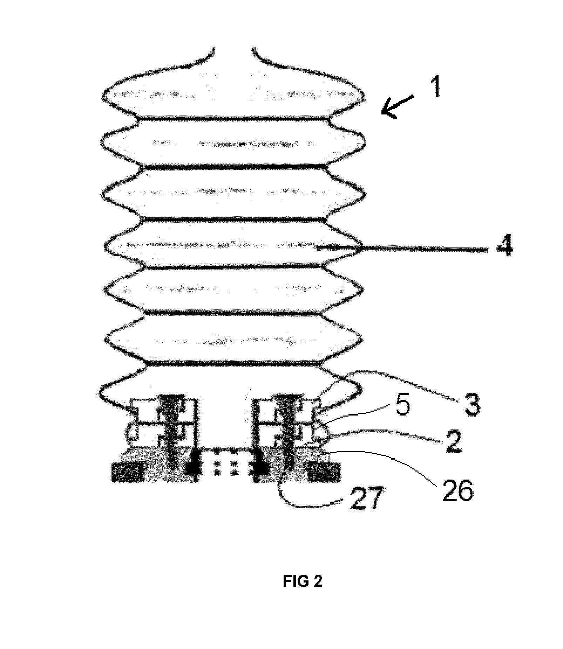

Figure 2 shows a cross section of a particular embodiment of a motor shaft protector for a motor shaft according to invention. This motor shaft protector (1) includes a first coupling piece (2), a second coupling piece (3) and bellows (4).

The first coupling piece (2) is made of electrically isolated material and comprises a contact face intended to be placed in contact with the cover (26). This first coupling piece (2) includes a main through hole, suitable for being crossed by the shaft, and two threaded secondary through holes, suitable for being crossed by screws (27).

The second coupling piece (3) is placed in contact with the first coupling piece (2). This second coupling piece (3) comprises a main through hole, suitable for being crossed by the shaft and two threaded secondary through holes, suitable for being crossed by screws.

The first coupling piece (2) and the second coupling piece (3) form a coupling set. The main through holes and the secondary through holes of both coupling pieces (2, 3) overlap. The coupling set comprises a coupling area (5) for the coupling with the bellows (4). In a particular embodiment, this coupling area (5) includes a rake along the outer perimeter of the coupling set. In different particular embodiments, this rake is present in the first coupling piece (2), the second coupling piece (3) or in both, in such way that when the first (2) and the second (3) coupling piece are joined, a reel coupling set results, with an coupling area with a rake.

The bellows (4) are connected to the first and second coupling piece. The bellows (4) comprises folds, in such way that even when the distance of its ends changes, a first end stays tightly attached to the coupling area (5) by a bracket, which attaches the first end of the bellows to the coupling area (5), and a second end is tightly attached to the shaft to be protected, by a bracket without interrupting the continuity of the bellows (4). In those embodiments where the coupling area comprises a rake, the first end of the bellows is attached to the rake, and the bracket fixes the first end of the bellows (4) to the rake in the coupling area (5), in order to provide a better attachment.

In this particular example, both first coupling piece (2) and second coupling piece (3) are provided as connectable pieces, to trigger the complete part. This is convenient in case it is used to protect a motor shaft with one end with a greater diameter than the rest of the shaft, like the main shaft (21) shown in Figure 1. In this case, both the first (2) as the second (3) coupling piece are mounted by approaching each connectable piece to each other in such a way that they embrace the shaft to be protected, connecting these pieces to each other afterwards. In a particular embodiment, this connection is directly performed with the same screws used to attach the coupling pieces (2, 3) to the cover.

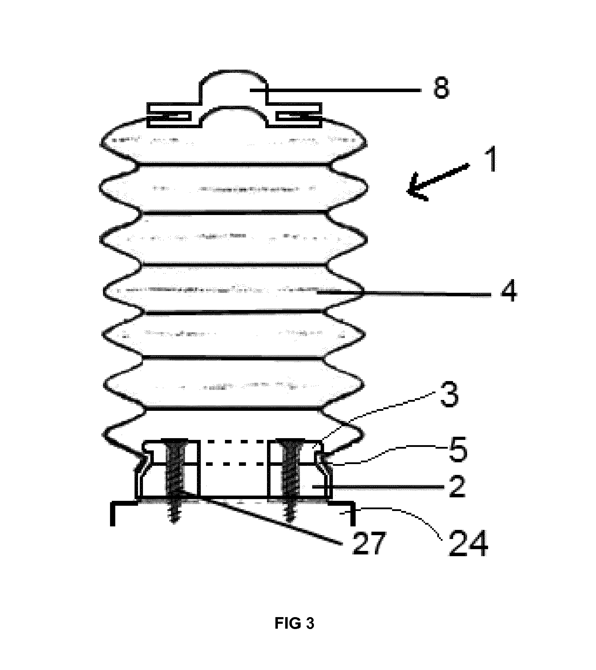

Figure 3 shows a cross view of another particular example of a motor shaft protector (1) according to invention. This motor shaft protector (1) includes a first coupling piece (2), a second coupling piece (3) and bellows (4).

The first coupling piece (2) and the second coupling piece (3) are the same as in the previous case, except that in this particular example they are not divided in two parts, because this embodiment is suitable for being installed on a motor shaft with a constant diameter, where they can be introduced at the shaft's end and be slid afterwards to put them in contact with the cover (24). In another particular example, they are divided in two to allow an alternative installation.

The bellows (4) are connected to the first coupling piece (2) and the second coupling piece (3). The bellows (4) comprise folds, in such way that even when the distance between the two ends changes, a first end remains tightly attached to the coupling area (5) by a bracket and a second end is closed and stays in contact with a part of the free shaft's end to protect, without breaking the continuity of the bellows (4).

In this particular embodiment, the bellows (4) further comprises a top cover (8) attached to the second end of the bellows in such way that the second end of the bellows (4) and the top cover (8) form a tight-closed package. In a particular embodiment, the top cover (8) comprises a notch and the second end of the bellows is housed and attached to the notch of the top cover. Other ways to attach the second end of the shaft and the cover are possible as well. The top cover (8) includes, at the side where the interior of the bellows (4) is visible, a doomed shaped housing to house the visible shaft's end. In a particular embodiment, the shaft is fixed to the top cover.

In a particular embodiment of the motor shaft protector, the attachment of the first coupling piece (2), the second coupling piece (3) and the cover they are in contact with is carried out by means of coupling screws (27), which pass the secondary through holes until attaching the coupling set to the cover (24).

The first coupling piece (2) and the second coupling piece (3) need to be manufactured of materials that do not produce galvanic current between these pieces and the cover of the «power trim» engine, which is made of aluminium. In a particular embodiment, the first coupling piece (2) is made of stainless steel 316, the second coupling piece (3) is made of nylon and the coupling screws are made of bronze.

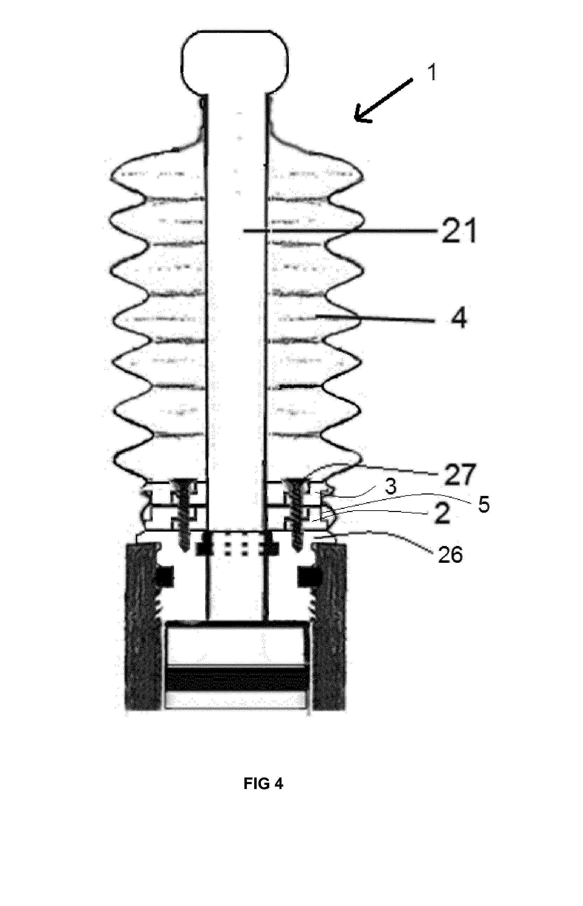

Figure 4 shows a cross section of a motor shaft (21) that comprises a particular embodiment of a motor shaft protector (1) according to invention. In this figure, one end of the bellows (4) is attached to the visible end of the shaft (21) and the other end of the bellows (4) is attached to the coupling set in the coupling area (5). The shaft (21) passes the main hole of the first and second coupling piece (2, 3), and these first and second coupling pieces (2, 3) are attached to the cover with screws (27).

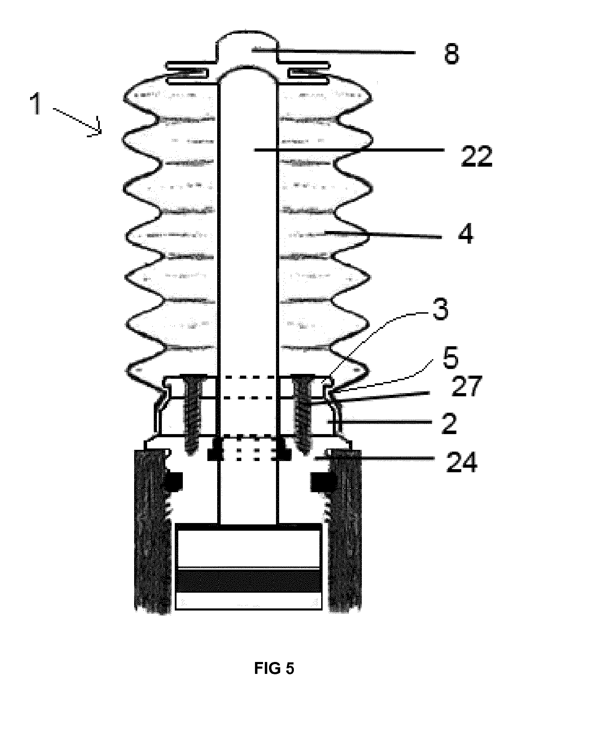

Figure 5 shows a cross section of a motor shaft (22) comprising a particular example of a motor shaft protector (1) according to invention. In this figure, the visible end of the shaft (22) rests upon the top cover (8) comprised in one end of the bellows (4) and the other end of the bellows (4) is attached to the coupling set in the coupling area (5). This top cover (8) includes a substantially doomed shaped housing, suitable for housing the visible end of the shaft (22). The shaft (21) itself, passes the main hole of the first and second coupling pieces (2,3), while these first and second coupling pieces (2,3) are attached to the cover (24) by means of screws (27).

## Claims

1. Motor shaft protector (1), intended to be installed in a «power trim» engine shaft (21,22,23) comprising a shaft (21,22,23) with a visible end and a cover (24,25,26) pierced by the shaft (21,22,23), the protector being **characterized in that** it comprises:
- a coupling set with a main through hole for the passage of a portion of the shaft (21,22,23) through said main through hole, the coupling set further comprising a contact zone, intended to be put upon the cover (24,25,26) and attached to it, and a coupling area (5), wherein the contact zone is manufactured of electrically isolated material, and
- bellows (4), comprising a first end suitable for being tightly attached to the coupling zone of the coupling set, and a second end, suitable for being in contact with part of the visible end of the motor shaft, in such a way that the interior of the bellows (4) stays watertight while in normal use.

2. Motor shaft protector (1) according to claim 1, wherein the coupling area comprises a rake for housing the first end of the bellows (4), in such way that the first end of the bellows (4) is attached to the rake.

3. Motor shaft protector (1) according to any of the previous claims, wherein the coupling set comprises threaded secondary through holes, each one of them intended to house a screw (27) for the attachment between the coupling set and the cover.

4. Motor shaft protector (1) according to any of the previous claims, wherein the coupling set is divided in two coupling pieces, a first coupling piece (2) intended to be in contact with the cover and a second coupling piece (3), arranged in contact with the first coupling piece (2).

5. Motor shaft protector (1) according to previous claim, wherein the first coupling piece (2) is manufactured in an electrically isolated material.

6. Motor shaft protector (1) according to any of the previous claims, wherein the bellows (4) comprises a top cover (8) located at its second end, suitable for housing the visible end of the shaft (21,22,23).

7. Motor shaft protector (1) according to previous claim, wherein the top cover (8) comprises a substantially doomed shaped housing suitable for housing the visible end of the shaft (21,22,23).

8. Motor shaft protector (1) according to claim 6, wherein the second end of the bellows (4) is housed in a notch of the top cover (8) and attached to it.

9. Motor shaft protector (1) according to any of claims 1 to 5, wherein the second end of the bellows (4) comprises a through hole intended to be attached to the shaft (21,22,23).

10. System that comprises a shaft (21,22,23) and a motor shaft protector (1) according to any of the previous claims, where the shaft (21,22,23) is arranged crossing the main through hole of the coupling set.
